# EUROPÄISCHE PATENTANMELDUNG

(11) **EP 1 839 484 A1**
(43) Veröffentlichungstag der Anmeldung: **03.10.2007**
(21) Anmeldenummer: 07004826.9
(22) Anmeldetag: 08.03.2007
(51) Int. Cl.: A01K 13/00

(54) **Schutzhülle für ein Huftier**

(30) Priorität: 27.03.2006 DE 202006005313 U; 27.03.2006 DE 202006005315 U
(71) Anmelder: Mayr, Andreas, 10178 Berlin (DE)
(72) Erfinder: Mayr, Andreas, 10178 Berlin (DE)

(57) **Zusammenfassung**

Es wird eine Schutzhülle gegen Insektenstiche für ein Huftier, insbesondere für ein Pferd, beschrieben, aus einem atmungsaktiven, dehnungsfähigen textilen Werkstoff, insbesondere einem Netzwerkstoff, mit einem schlauchförmigen Rumpfbekleidungsteil (2), das eine vordere Öffnung und eine hintere Öffnung sowie unterseits vier Öffnungen mit ärmelartigen Ansätzen (3) für die vier Pferdebeine aufweist. Bisherige textile Schutzvorrichtungen gegen Insekten werden entweder dem Pferd lediglich übergehängt oder diesem unter Zuhilfenahme von Gurten umgelegt; dabei bleiben mindestens die Achseln und der Bereich der Geschlechtsorgane an der unteren Bauchnaht offen, die nicht nur nicht geschützt sind, sondern Einlass für die Insekten sind, die dann in die abgedeckten Bereiche vordringen.

Außerdem neigen die bekannten Schutzhüllen dazu, sich auf der Felloberfläche des Pferdes zu verschieben, insbesondere entsprechend dem Haarstrich des Felles nach hinten zu wandern.

Bei der erfindungsgemäßen Schutzhülle verlaufen verschließbare Öffnungen (6) beidseitig in Längsrichtung/horizontal über den Bereich des Unterbauchs, die bogenförmig in die ürmelartigen Ansätze (3) übergehen und an deren unterem Abschluss enden, und weitere verschließbare Öffnungen (7) auch hinten an den ärmelartigen Ansätzen (4) für die

Hinterbeine in deren Längsrichtung über deren gesamte Länge. Vorne schließt sich an das Rumpfbekleidungsteil (2) ein ebenfalls schlauchförmiges Halsteil (I), sowie hinten ein Schlauchteil (5) zum Durchstecken des Pferdeschweifs an. Hältegurte (11, 12, 14, 16) halten die Schutzhülle in der korrekten Position.

## Beschreibung

Die Erfindung bezieht sich auf eine Schutzhülle für ein Huftier, insbesondere für ein Pferd, zum Schutz von Huftieren gegen Insekten, aus einem atmungsaktiven, dehnungsfähigen textilen Werkstoff, insbesondere einem Netzwerkstoff, mit einem schlauchförmigen Rumpfbekleidungsteil, das eine vordere Öffnung und eine hintere Öffnung sowie unterseits vier Öffnungen mit ärmelartigen Ansätzen für die vier Pferdebeine aufweist, und betrifft eine Verschlusstechnik zum passformgerechten Anlegen der Schutzhülle, die es ermöglicht, dem Huftier, im nachfolgenden speziell einem Pferd, eine aus einem einzigen Teil bestehende schlauchartige Schutzbekleidung so anzulegen, dass sie Gliedmaßen und After bündig umschließen und Bauchnaht und Geschlechtsteile des Tieres einschließen.

Bisherige textile Schutzvorrichtungen gegen Insekten wurden entweder dem Pferd lediglich übergehängt oder diesem unter Zuhilfenahme von Gurten umgelegt; dabei bleiben mindestens die Achseln und der Bereich der Geschlechtsorgane an der unteren Bauchnaht offen. Gerade diese empfindlichen Bereiche gilt es jedoch beim Pferd zu schützen. Darüber hinaus sind bei herkömmlichen Anwendungen diese Bereiche nicht nur nicht geschützt, sondern sie sind Einlass für die Insekten, die dann in die abgedeckten Bereiche vordringen. Außerdem neigen die bekannten Schutzhüllen dazu, sich auf der Felloberfläche des Pferdes zu verschieben, insbesondere entsprechend dem Haarstrich des Felles nach hinten zu wandern.

Pferde, die zu Hautekzemen neigen, dürfen keinesfalls an verwundeten oder an soeben abgeheilten Stellen wiederholt von Insekten gestochen oder gebissen werden; es kann ein einziger Stich bereits ausreichen, um ein betroffenes Pferd zu allergischen Reaktionen zu veranlassen, die Juckreiz an den gestochenen oder gebissenen Stellen auslösen. Im Regelfall scheuert sich das Pferd an diesen Stellen oft bis zum Verlust der dort befindlichen Haut oder Haare, oder es brechen alte Verkrustungen auf.

Die Erfindung basiert auf dem Grundgedanken, dass ein einzelnes zusammenhängendes Teil aus einem schlauchartigen Werkstoff, vorzugsweise Netzmaterial mit vier Ausstülpungen für die Gliedmaßen des Tieres, welches alle von Insektenangriffen gefährdeten und anfälligen Stellen abdeckt, das betroffene Pferd sicher und nachhaltig schützen kann. Die Problemstellung besteht nun darin, dem Pferd diese Schutzhülle anzulegen, ohne dass es mit seinen Gliedmaßen durch zumindest zwei der vier Ausstülpungen hindurchschlüpfen muss, und dann die Schutzhülle in der angelegten Stellung zu halten.

Die Erfindung ist dadurch gekennzeichnet, dass verschließbare Öffnungen beidseitig in Längsrichtung horizontal über den Bereich des Unterbauchs verlaufen, die bogenförmig in die ärmelartigen Ansätze übergehen und an deren unterem Abschluss enden. Die erfindungsgemäße Verschlusstechnik löst hierdurch das Problem, dem Pferd ein aus einem einzelnen Stück bestehendes, rundum geschlossenes Werkmaterial mit vier Ausstülpungen für die Gliedmaßen stabil sitzend anzulegen, und ermöglicht daher einen passformgerechten Sitz am Körper, Nach einem weiteren Aspekt ist die Erfindung dadurch gekennzeichnet, dass mit dem Rumpfbekleidungsstück ein bogenförmiger, sich von der einen Seite des Rutnpfbekleidungsstückes bis zu dessen anderer Seite im angelegten Zustand der Schutzhülle vor der Brust des Tieres erstreckender Haltegurt beiderseits verbunden ist.

Weiterbildungen und vorteilhafte Ausgestaltungen der Erfindung sind in den Unteransprüchen gekennzeichnet und ergeben sich aus der folgenden Beschreibung eines bevorzugten Ausführungsbeispiels unter Bezugnahme auf die Zeichnung. In der Zeichnung zeigen:
- Fig. 1: die einem Pferd angelegte Schutzhülle in Seitenansicht;
- Fig. 2: die Schutzhülle am Pferd, von hinten gesehen, mit hängendem Schweifschlauchteil;
- Fig. 3: eine Ansicht entsprechend Fig. 2, jedoch mit hochgehobenem Schweifschlauchteil;
- Fig. 4: ein Kopfteil der Schutzhülle, den Pferdekopf einschließend, in Seitenansicht;
- Abb. 5: den Kopfteil der Schutzhülle, den Pferdekopf einschließend, in Frontalansicht.

Die im folgenden beschriebene Schutzhülle für Pferde, aber auch für andere Huftiere, besteht aus einem Schutznetz, welches das Pferd an allen von Insektenstichgefahren betroffenen Körperstellen schützt. Neben Mähnenkamm und Schweifrübe sind das insbesondere die komplette Bauchunterseite, die Achselhöhlen der Vorder- und Hinterbeine und die Wcichteile. Die Schutzhülle ist so konzipiert, dass sie nicht nur den Mähnenkamm und die Schweifrübe abdeckt, sondern auch die anderen oben genannten Partien schützt. Zum Reiten des Pferdes mit angelegter Schutzhülle kann eine hier nicht dargestellte Reitnetzversion vorgesehen werden, die sich dadurch auszeichnet, dass sich in einem beim gesattelten Pferd im Sattelbereich befindlichen Teil des Rumpfbekleidungsteils 2 ein Ausschnitt befindet, der wenigstens die Größe der Auflagefläche eines Sattels bat, und dass um den Ausschnitt zu dessen Auseinanderziehbarkeit im textilen Werkmaterial des Rumpfbekleidungesteils 2 in gegenseitigem Abstand angeordnete dreieekige Einsätze angeordnet sind.

Das Netz der Schutzhülle besteht durchgehend aus einem Halsteil 1 und einem um den Bauch geschlossenen Rumpfteil 2 mit vier unterseitig befindlichen, ärmelartigen Ansätzen 3, 4 für die Beine und einem hinterseitig befindlichen, den Schweif rundum bedeckenden schlauchartigen Schweifschutz 5. Die Ansätze können auch länger als dargestellt sein, z.B. bis zu den Fesseln.

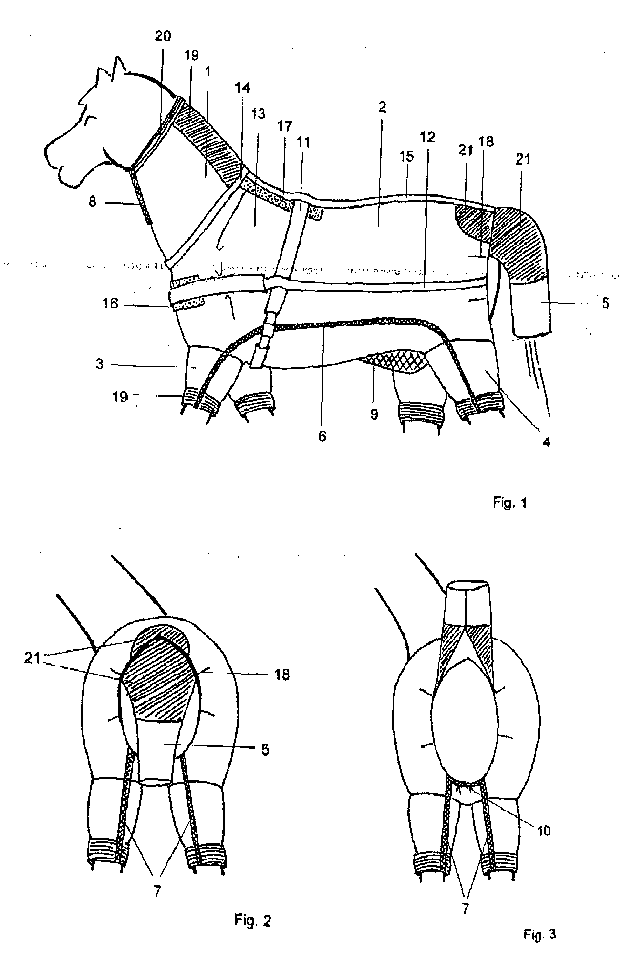

Zu beiden Seiten des Netzes befinden sich in Längsrichtung seitlich über den Bauch verlaufende schlitzartige Verschluss-Öffnungen 6, die zu einer Seite bogenförmig in den ärmelartigen Ansatz 3 der Vorderbeine und zur anderen Seite bogenförmig in den ärmelartigen Ansatz 4 der Hinterbeine übergehen und an deren unteren Abschlüssen enden (siehe Fig. 1). Rückseitig der ärmelartigen Hinterbeinansätze 4, also bezüglich der Blickrichtung des Pferdes hinten, befindet sich in vertikaler Richtung je eine weitere schlitzartige Verschluss-Öffnung 7 (siehe Fig. 2). Bei dem beschriebenen Ausführungsbeispiel sind die Verschlussöffnungen mit Reißverschlüssen schließbar, was eine leicht zu handhabende und völlig insektenundurchlässige Verschlussweise darstellt. Als Alternativen kommen auch Flächenreißverschlüsse (Klettverschlüsse), enge Knopfreihen, z.B. Druckknöpfe, Haken- und Ösenreihen u.s.w. in Frage.

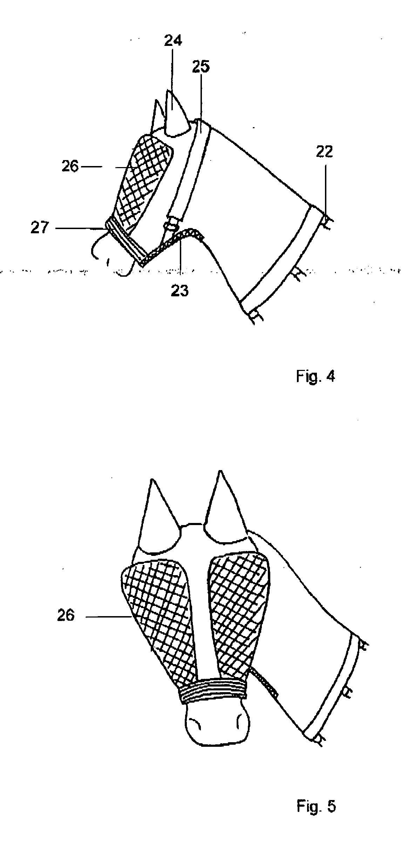

Zum Anziehen des Netzes werden alle beschriebenen Verschlüsse geöffnet. Das Netz wird dem Pferd über den Kopf um den Hals gelegt und nach hinten über den Rücken gestreift. Damit kommt der obere Teil des Netzes auf dem Pferderücken zu liegen. Danach werden die seitlichen Verschlussöffnungen 6 geschlossen, Reißverschlüsse beispielsweise werden von vorne nach hinten zugezogen. Hals, Rücken, Vorderbeine und Bauch sind jetzt bekleidet. Nun werden die ärmelartigen Ansätze der Hinterbeine um diese gelegt und hinterseitig verschlossen siehe (Fig. 2 und 3). Die Reißverschlüsse 7 werden von unten nach oben zugezogen.

Um das Anziehen über den Kopf des Pferdes zu vereinfachen, ist eine zusätzliche Verschlussöffnung 8 auf der Unterseite des Halsteils 1 angebracht (siehe Fig. 1). Diese wird ebenfalls vor dem Anlegen geöffnet. Damit vergrößert sich der Umfang der um den Kopf zu legenden Öffnung. Nach dem Überziehen wird die Verschlussöffnung 8 geschlossen. Zuletzt wird der Schweif durch den röhrenförmigen Schweifschutz 5, der auf seiner Unterseite in Längsrichtung zur Hälfte umfangsmäßig geschlossen ist, gezogen. Das Umschließen des Schweifes gewährleistet einerseits optimalen Halt und andererseits wird ausgeschlossen, dass Insekten an die Schweifrübe gelangen können.

Zum Schutz der Weichteilc eines Wallachs ist dessen Urinierbereich mit einem Einsatz 9 eines leicht flüssigkeitsdurchlässigen, grobmaschigen textilen Werkstoffs zum Durchurinieren versehen (siehe Fig. 1). Dieser Einsatz ist so weit geschnitten, dass der Schlauch ohne Irritation ausgefahren werden kann. An seinem hinteren Ende wird der Einsatz mit einem Gummizug 10 zusammengerafft (siehe Fig. 3). Zum Säubern dieses Bereiches kann eine der seitlichen Verschlussöffnungen 6 partiell geöffnet und das Netz mit einem Wasserschlauch ausgespritzt werden.

Für einen optimalen Sitz befinden sich am Rumpfteil mehrere z.T. längenverstellbare Haltegurte, die z.T. durch fest mit dem Rumpfteil 2 verbundene tunnelartige Schläuche geführt werden (siehe Fig. 1). Ein erster Haltegurt 11 verläuft durch einen Tunnel in vertikaler Richtung hinter den Vorderbeinen rund um den Rumpf und ist in seiner Länge auf den Rumpfumfang einstellbar. Aufgrund des im Verlauf des Pferdekörpers nach hinten zunehmenden Bauchumfangs hindert der eingestellte Gurt ein Verschieben des Netzes über den Bauch nach hinten. Ein zweiter, zweckmäßigerweise ebenfalls längenverstellbarer Haltegurt 12 verläuft in horizontaler Richtung, und zwar beim beschriebenen Beispiel vorne durchgehend um den Rumpf, beginnend und endend an der hinteren Rumpfteilöffnung. Im Flanken- und Bauchbereich ist er fest mit dem Rumpfteil verbunden. Im Brust-/Schulterbereich wird er durch einen Tunnel geführt. Gemäß einer vereinfachten Ausführung verläuft er nur, beiderseits ausgehend vom ersten Haltegurt 11 und mit diesem verbunden, nach hinten. Der im Brust-/Schulterbereich befindliche Werkstoff ist mit Mehrweite versehen, die durch den Tunnel zusammengerafft wird. So entsteht im Brust-/Schulterbereich ein sogenanntes Aushulsegment 13, das die benötigte Bewegungsfreiheit gewährleistet. Alternativ könnte der Tunnel auch entfalten und kann dann die Mehrweite in Form von Falten festgenäht werden. Der Gurt 12 hält das Rumpfteil 2 bei Bewegung des Pferdes zusätzlich in seiner Position, indem er die in Fellrichtung nach hinten strebenden Zugkräfte im Brustbereich aufnimmt. Es wird also das Netz durch diesen Gurt gehalten und gleichzeitig ist die Bewegungsweite für Brust und Schulter aufgrund der Raffung gegeben. Weitere fest mit dem Rumpfteil verbundene Haltegurte verlaufen um den Hals 14 und entlang dem Rücken 15 und dienen der Stabilisierung des Netzes. Die gegebenenfalls für einzelne oder alle Haltegurte vorgesehene Längenveränderlichkcit ergibt eine verbesserte Anpassung an verschieden große Pferde.

Zusammengefasst dargestellt, wird das Netz der Schutzhülle also durch die folgenden Haltegurte an Ort und Stelle gehalten: durch den ersten Haltegurt 11, der um das Pferd von oben nach unten in Kontakt zum Netz liegt und einen Ring um den Pferderumpf bis zur Pferde-Achselhöhle hinter den Vorderbeinen ergibt; den zweiten Haltegurt 12, der in Kontakt zum Netz mehr oder weniger horizontal vom ersten Haltegurt beiderseits über die Pferdeseiten nach hinten, und vorzugsweise auch nach vom , also quer über die Brust des Pferdes, verläuft; den dritten Haltegurt 14, der einen Ring um den Pferdehals bildet ; und den vierten Haltegurt 15, der mit fester Verbindung am obersten Punkt des Haltegurts 14 ansetzt und entlang dem Widerrist und Pferderücken verläuft.

Die Partien des Pferdes, die den Zugkräften der Haltegurte entgegenwirken, sind mit einer speziellen Polsterung versehen. Das ist der Brustbereich unterhalb des Halses 16 und der Wiederrist 17.

An der hinteren Rumpföffnung sind mehrere in Längsrichtung verlaufende Abnäher 17 oder wahlweise auch Falten gearbeitet, die den Zweck haben, den Hüllendurchmesser nach hinten zu verkleinem.

Dic Abschlüsse der ärmelartigen Beinansätze 3, 4 und der Abschluss der vorderseitigen Öffnung am Hals werden mit kontraktierenden Strängen 19, beispielsweise Gummibändern, nah am Pferdekörper gehalten (siehe Fig.1). Diese kontraktierenden Stränge werden mit einem weichen, fellartigen Werkstoff ummantelt, der Scheuerstellen am Pferd verhindert.

Um zu verhindern, dass sich Pferde, die bereits vom Juckreiz des Ekzems betroffen sind, wundscheuem, können die betroffenen Bereiche mit einem speziellen textilen Werkstoff, einem Abstandsgewirke 20, 21, das eine ausgeprägte Stauchhärte besitzt, abgedeckt werden.

An diesen Stellen wird der textile Grundwerkstoff durch das Abstandsgewirke unterlegt. Solche Stellen sind in der Regel Mähnenkamm 20 und Schweifrübe 21 (siehe Fig. 1).

Um den Pferdekopf zu schützen, kann die Schutzhülle ein separates Kopfteil (siehe Fig. 4 und 5) umfassen, welches im angezogenen Zustand das Halseil 1 partiell überlappt und mit ihm durch Klickverschlüsse 22 oder ähnliches verbindbar ist. Um das Anziehen des Kopfteils zu erleichtern, ist eine Verschlussöffnung 23 auf der Unterseite des Halses angebracht (siehe Fig. 4). Diese wird vor dem Anlegen geöffnet. Damit vergrößert sich der Umfang der über den Kopf zu ziehenden Öffnung. Nach dem Überziehen wird dieser Verschluss 23 geschlossen. Die Ohren sind durch kegelartige Ausstülpungen 24 des textilen Werkstoffes bedeckt.

Ein längenverstellbarer Haltegurt, der durch einen lest mit dem Kopfteil verbundenen Tunnel 25 geführt wird, verläuft, beginnend und endend zu beiden Seiten der Verschlussöffnung 23, über die Ganaschen und hinter den Ohren um den Kopf. Der auf den Kopfumfang eingestellte Gurt fixiert das Kopfteil in seiner Position. Der textile Werkstoff ist oberhalb der Augen ausgespart und durch einen besonders transparenten textilen Werkstoff 26 mit schnittmäßig eingearbeiteter Weite ersetzt (siehe Fig. 4 und 5). Der vorderseitige Abschluss des Kopfteils wird mittels eines kontraktierenden Stranges 27, beispielsweise eines Gummibands, nah am Kopf gehalten. Dieser Strang ist mit einem weichen, fellartigen Werkstoff ummantelt, der mögliche Scheuerstellen verhindert.

Das Material der Schutzhülle ist ein textiler Netzwerkstoff, der bei mindestens 30°C maschinenwaschbar ist. Es handelt sich um einen Netzwerkstoff mit einer Maschenweite in der Größenordnung von 1 bis 2 mm. Wenn auch die Insekten mit ihrem Saugrüssel durch die Netzmaschen durchkommen, erreichen sie aufgrund der Höhe der Pferdehaare nicht die eigentlichen Haut.

Die beschriebene Schutzhülle besteht also aus einem komplett geschlossenen Schutznetz, welches einen hohen Tragekomfort durch bequeme Passform für das Pferd und eine angemessene Einfachheit in der Handhabung für Pferd und Halter bietet.

## Patentansprüche

1. Schutzhülle für ein Huftier, insbesondere für ein Pferd, aus einem atmungsaktiven, dehnungsfähigen textilen Werkstoff, insbesondere einem Netzwerkstoff, mit einem schlauchförmigen Rumptbekleidungsteil (2), das eine vordere Öffnung und eine hintere Öffnung sowie unterseits vier Öffnungen mit ärmelartigen Ansätzen (3, 4) für die vier Pferdebeine aufweist, **dadurch gekennzeichnet, dass** verschließbare Öffnungen (6) beidseitig in Längsrichtung horizontal über den Bereich des Unterbauchs verlaufen, bogenförmig in die ärmelartigen Ansätze (3, 4) übergehen und an deren unterem Abschluss enden.

2. Schutzhülle, insbesondere nach Anspruch 1, für ein Huftier, insbesondere für ein Pferd, aus einem atmungsaktiven, dehnungsfähigen textilen Werkstoff, insbesondere einem Netzwerkstoff, mit einem schlauchförmigen Rumpfbekleidungsteil (2), das eine vordere Öffnung und eine hintere Öffnung sowie unterseits vier Öffnungen mit ärmelartigen Ansätzen (3, 4) für die vier Pferdebeine aufweist, **dadurch gekennzeichnet, dass** mit dem Rumpfbekleidungsstück (2) ein bogenförmiger, sich von der einen Seite des Rumpfbeklcidungsstückes bis zu dessen anderer Seite im angelegten Zustand der Schutzhülle vor der Brust des Tieres erstreckender IIaltegurt beiderseits verbunden ist.

3. Schutzhülle nach Anspruch 1 oder 2, **dadurch gekennzeichnet, dass** verschließbare Öffnungen (7) auch an den ärmelartigen Ansätzen (3, 4) für die Hinterbeine in deren Längsrichtung über deren gesamte Länge verlaufen.

4. Schutzhülle nach einem der Ansprüche 1 bis 3, **dadurch gekennzeichnet, dass** ein Haltegurt (12) in im wesentlichen horizontaler Richtung um den Rumpf verläuft, beginnend und endend an der hinteren Rumpfteilöffnung, der im Flanken- und Bauchbereich fest mit dem Rumpfteil verbunden ist und im Brust-/Schulterbereich durch einen Tunnel geführt ist, wobei der im Brust-/Schulterbereich befindliche Werkstoff (13) mit Mehrweite versehen ist, die durch den Haltegurt (12) im Tunnel zusammengerafft wird.

5. Schutzhülle nach einem der Ansprüche 1 bis 4, **dadurch gekennzeichnet, dass** sie einen um das Pferd mit Kontakt zum Rumpfbekleidungsteil (2) legbaren, einen Ring um den Pferderumpf vom Widerrist bis zur Pferdeachselhöhle hinter den Vorderbeinen ergebenden Haltegurt (11) umfasst,

6. Schutzhülle nach einem der Ansprüche 1 bis 5, **dadurch gekennzeichnet, dass** sich vorne an das Rumpfbekleidungsteil (2) ein ebenfalls schlauchförmiges Halsteil (1), sowie hinten ein Schlauchteil (5) zum Durchstecken des Pferdeschweifs anschließt.

7. Schutzhülle nach einem der Ansprüche 1 bis 3, **dadurch gekennzeichnet, dass** in das Rumpfbekleidungsteil (2) hauchseitig im Bereich des Schlauchs eines Wallachs oder Ilengstes ein Stück eines leicht flüssigkeitsdurchlässigen grobmaschigen Netzes (8) eingesetzt ist,

8. Schutzhülle nach Anspruch 4 oder 5, **dadurch gekennzeichnet, dass** das Rumpfbekleidungsteil (2) als Führung für die Haltegurte (11, 12) jeweils einen tunnelartigen Schlauch trägt, der mit ihm zumindest stellenweise verbunden ist.

9. Schutzhülle nach einem der Ansprüche 4, 5 oder 8, **dadurch gekennzeichnet, dass** die Auflageflächen der Gurte im Bereich des Widerristes und der Brust gepolstert (16, 17) sind.

10. Schutzhülle nach einem der Ansprüche 1 bis 9, **dadurch gekennzeichnet, dass** die freien Ränder der ärmelartigen Ansätze (3,4) und gegebenenfalls des Halsteils (1) und eines Kopfteils, zum Andrücken an die Decke des Pferds kontraktierende Stränge (19, 27) enthalten, welche mit fellartigem Werkstoff ummantelt sind.

11. Schutzhülle nach einem der Ansprüche 1 bis 10, **dadurch gekennzeichnet, dass** das textile Werkmaterial des Rumpfbekleidungsteils (2) in dem am Pferd am Schweif, an der Kruppe und/oder am Mähnenkamm des Pferdes zu liegen kommenden Teilen durch ein Abstandsgewirke (20), (21) unterlegt ist.

12. Schutzhülle nach einem der Ansprüche 1 bis 11, **dadurch gekennzeichnet, dass** sie noch ein Kopfteil umfasst, das aus einem Kopf-Vorderteil und einem schlauchförmigen Halsteil besteht, auf der Unterseite eine verschließbare Verschlussöffnung (23) und im Bereich der Augen transparente Schutzhüllenteile (26) aufweist, und dass ein Haltegurt, der durch einen fest mit dem Kopfteil verbundenen Tunnel (25) geführt ist, beginnend und endend zu beiden Seiten der Verschlussöffnung (23), über die Ganaschcn und hinter den Ohren um den Kopf verläuft.

13. Schutzhülle nach einem der Ansprüche 1 bis 12, **dadurch gekennzeichnet, dass** das Rumpfbekleidungsteil (2) mit den ärmelartigen Ansätzen (3, 4), sowie gegebenenfalls dem Halsteil (1) und dem Schlauchteil (5) für den Schweif ein einziges zusammenhängendes Netzstück bilden.

14. Schutzhülle nach einem der Ansprüche 1 bis 13, **dadurch gekennzeichnet, dass** die verschließbaren Öffnungen durch Reißverschlüsse verschließbar sind.

15. Schutzhülle nach einem der Ansprüche 1 bis 14, **dadurch gekennzeichnet, dass** zumindest ein Teil der Haltegurte längenverstellbar ist.
